# EUROPEAN PATENT SPECIFICATION

(11) **EP 2 629 200 B1**
(45) Date of publication and mention of the grant of the patent: **23.03.2016**
(21) Application number: 11832355.9
(22) Date of filing: 31.08.2011
(51) Int. Cl.: G06F 11/00, G06F 9/445, G06F 9/44

(54) **EMBEDDED PROGRAM UPDATE METHOD, EMBEDDED PROGRAM UPDATE PROGRAM, ELECTRONIC APPARATUS, NETWORK SYSTEM**
VERFAHREN ZUR AKTUALISIERUNG EINES EINGEBETTETEN PROGRAMMS, PROGRAMM ZUR AKTUALISIERUNG EINES EINGEBETTETEN PROGRAMMS, ELEKTRONISCHE VORRICHTUNG UND NETZWERKSYSTEM
PROCÉDÉ DE MISE À JOUR DE PROGRAMMES INTÉGRÉS, PROGRAMME DE MISE À JOUR DE PROGRAMMES INTÉGRÉS, APPAREIL ÉLECTRONIQUE, SYSTÈME DE RÉSEAU

(30) Priority: 15.10.2010 JP 2010232493
(43) Date of publication of application: 21.08.2013
(73) Proprietor: Hitachi Solutions, Ltd., Tokyo 140-0002 (JP)
(72) Inventor: FUJITA Masatoshi, Tokyo 140-0002 (JP)
(74) Representative: Liesegang, Eva
(86) International application number: PCT/JP2011/069729
(87) International publication number: WO 2012/049914

(56) References cited:
- WO-A1-2007/071324
- JP-A- 2001 034 601
- JP-A- 2004 094 832
- JP-A- 2004 192 278
- JP-A- 2004 295 299
- JP-A- 2005 157 637
- JP-A- 2006 293 512
- JP-A- 2007 065 938
- US-A1- 2007 050 430
- US-A1- 2010 057 839

## Description

### Technical Field

The present invention relates to a technique for updating an embedded program of an electronic device.

### Background Art

As information society develops in recent years, informational environments surrounding automobiles have been rapidly prepared. For specific examples, various types of car information systems such as car navigation devices, car audio systems, CD/DVD/Blu-ray disc drives, and the like are already in practical use. In addition, along with practical realization of these devices, car information network systems in which various types of car information devices are connected through data transmission channels such as ring-like channels and in which data exchange is performed between the information devices have been developed.

Cars are including information devices as mentioned above. On the other hand, for adding functions to various types of information devices, preventing information leak, countermeasure against defects, and the like, needs for periodically updating embedded software of information devices have been increased.

Embedded software is stored in a storage device such as a non-volatile memory, a magnetic disk, and the like equipped on an information device. Embedded software is updated by acquiring updated version of data through a data storage medium or a network and writing it to the above-mentioned storage device.

JP Patent Publication (Kokai) No. H11-110218 A (1999) describes a technique for updating a firmware of an electronic device by evacuating an older firmware into a storage area and writing a newer firmware into another storage area.

US 2007/050430 A1 describes a method and system for in-place updating original content of an original version stored in a non-volatile storage device wherein at least part of the content of each of n blocks of the original version are modified in the updated version. The method includes obtaining an update package. It also includes performing m block storage operations, wherein each block storage operation includes writing content to a block in the non-volatile storage device. The block storage operations include update block storage operations storing updated content of the updated version in the non-volatile storage device, while the updated content is generated in accordance with at least the update package.

US 2010/0057839 A1 describes a design-system distributing method wherein, when a server side design system is updated, a server compares an updated server side design system and a client updated state data, and the server distributes an updated assisting system, an update indication data and a difference data to a client system based on the comparing result. The client system starts the stored update assisting system such that an update notice is outputted to a user to urge update of the client side design system each time a preset condition is satisfied until an update command of the client side system is supplied to the client system. The client system generates and transmits the client update state data to the server to indicate an update state of the client side design system.

WO 2007/071324 A1 describes a method of generating a delta file, the delta file including update instructions for causing a target processing device to transform a current memory image module into an updated memory image module. The method comprises: incorporating a parametric representation of a first memory address in the delta file, the parametric representation being parametric with respect to at least one parameter; and incorporating parameter resolution instructions in the delta file, wherein the parameter resolution instructions are adapted to cause the target processing device to determine a value of said at least one parameter and to determine an address value of the first memory address from the parametric representation and the determined value of said at least one parameter.

### Summary of Invention

### Technical Problem

Components configuring an information device such as a CPU (Central Processing Unit) or a memory (storage element) are supplied from semiconductor manufacturers, and information device manufacturers assemble those components. Embedded software is written into the assembled product and the product is shipped to markets as a final product.

Recently, performances of CPU or memory components are improved frequently. Along with that, supply cycle of components has been shortened, thus in some cases it is difficult to procure the components within production and sales terms for the same model of information device.

When such a problem occurs, even if same products are shipped as final products, the electronic components used in those products such as CPU, memory, and the like have different specs in a precise sense depending on shipping schedules, although having compatibilities.

When electronic components configuring a product are different, even if those electronic components are compatible, some products may not properly work without modifying a part of the embedded software. In such a case, updated versions of embedded software that are appropriate for the same products may be different from each other depending on component model numbers or the like.

If updated versions of embedded software are different for each of electronic components, updated versions of embedded software must be prepared individually according to the respective model numbers of electronic components, thus updating tasks may be complicated. In addition, users of the electronic devices must check the model numbers of the electronic components equipped in the user's own electronic devices and determine corresponding updated versions. It poses a heavy burden on the users for the updating tasks.

The present invention has been made to solve the problem stated above, and it is an object of the present invention to provide a technique for decreasing work burdens for updating embedded programs of electronic devices.

### Solution to Problem

The present invention provides a method for updating an embedded program according to claim 1 and an electronic device according to claim 6. Embodiments of the invention are defined in the dependent claims.

### Advantageous Effects of Invention

With an embedded program update method according to the present invention, it is not necessary to create updated versions of embedded program for each of model numbers of electronic component, and it is only necessary to prepare the differential data. It enables to decrease a work burden for updating the embedded program. In addition, users only have to collectively acquire the common update data and the differential data. Therefore, it is not necessary to work on determining corresponding updated versions by checking model numbers of the electronic components, for example, thereby decreasing work burdens of users.

### Brief Description of Drawings

[Figure 1] Figure 1 is a configuration diagram of a network system 1000 according to an embodiment 1 of the present invention.
[Figure 2] Figure 2 is a diagram showing a configuration of the updated version data 400 held in the disk 151 or the server 200.
[Figure 3] Figure 3 is a diagram showing a configuration of the update procedure data 410 and its data example.
[Figure 4] Figure 4 is a diagram explaining a process flow for updating the embedded program 141.
[Figure 5] Figure 5 is a diagram showing a data example of the update procedure data 410 in the embodiment 2.
[Figure 6] Figure 6 is a diagram explaining a process flow for updating the embedded program 141 executed by the update program 120 in the embodiment 2.
[Figure 7] Figure 7 is a diagram showing a data example of the update procedure data 410 in the embodiment 3.
[Figure 8] Figure 8 is a diagram explaining a process flow for updating the embedded program 141 executed by the update program 120 in the embodiment 3.
[Figure 9] Figure 9 is a diagram showing a data example of the update procedure data 410 in the embodiment 4.
[Figure 10] Figure 10 is a diagram explaining a process flow for updating the embedded program 141 executed by the update program 120 in the embodiment 4.

### Description of Embodiments

### <Embodiment 1>

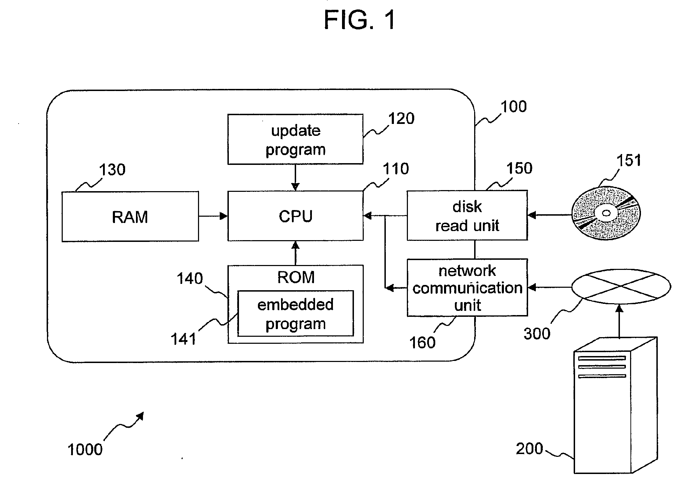

Figure 1 is a configuration diagram of a network system 1000 according to an embodiment 1 of the present invention. The network system 1000 includes an electronic device 100 and a server 200. The electronic device 100 and the server 200 are connected through a network 300.

The electronic device 100 is a device, such as a car information device, that is capable of communicating with the network 300. The electronic device 100 includes a CPU (Central Processing Unit) 110, an update program 120, a RAM (Random Access Memory) 130, a ROM (Read Only Memory) 140, a disk read unit 150, and a network communication unit 160.

The CPU 110 is a processing device that executes the update program 120 and an embedded program 141 stored in the ROM 140. Hereinafter, for the sake of convenience of description, each of programs will be explained as actors. However, it is noted that processing units such as the CPU 110 actually execute these programs.

The update program 120 is a program describing a process for updating the embedded program 141 into a new version. Detailed behaviors will be described later. The update program 120 can be stored in a non-volatile storage device such as a HDD (Hard Disk Drive) or can be stored in the ROM 140 separately from the embedded program 141. The update program 120 itself can be configured as embedded software or as general software that can be voluntarily rewritten. The update program 120 acquires, from a below-described disk 151 or the server 200, updated version data 400 (described later) of the embedded program 141 and updates the embedded program 141.

The RAM 130 is a memory device that temporarily stores data that is necessary when the CPU 110 executes processes or the like. The RAM 130 discards data stored in it when a power supply of the electronic device 100 is turned OFF.

The ROM 140 is a read-only memory device that stores the embedded program 141. The ROM 140 keeps holding data even when the power supply of the electronic device 100 is turned OFF. The data stored in the ROM 140 cannot be rewritten individually, thus it is necessary to collectively rewrite the data for each of write units with some collected amounts (for each of blocks, for example).

The embedded program 141 is a program describing a behavior control process of the electronic device 100. The embedded program 141 is configured as embedded software. A specification of the embedded program 141 may be individually different depending on model numbers of electronic components such as the CPU 110, the RAM 130, and the ROM 140. Therefore, when updating the embedded program 141, it is necessary to acquire updated versions corresponding to the model numbers of these electronic components.

The disk read unit 150 reads out data stored in the disk 151 to output to the CPU 110. The disk 151 is an information storage medium such as a CD, a DVD, or an external HDD. The disk 151 stores the updated version data 400 of the embedded program 141. A configuration of the updated version data 400 will be described later.

The network communication unit 160 is a network interface for connecting the electronic device with the network 300.

The server 200 is a server apparatus that holds the updated version data 400 of the embedded program 141. The update program 120 downloads the updated version data from the server 200, and is capable of updating the embedded program 141.

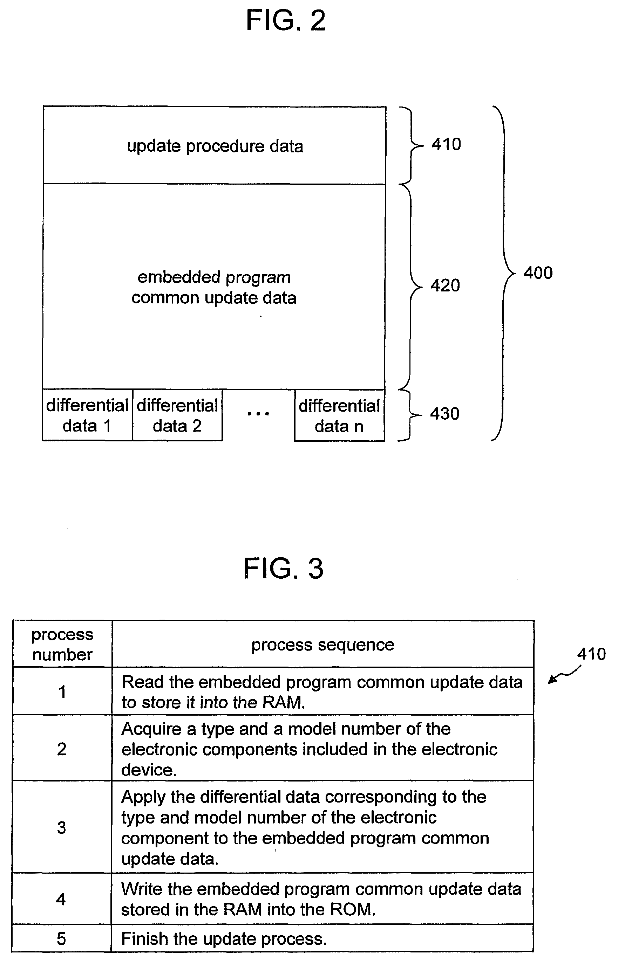

Figure 2 is a diagram showing a configuration of the updated version data 400 held in the disk 151 or the server 200. The updated version data 400 is a piece of data which is used by the update program 120 to update the embedded program 141. The updated version data 400 includes update procedure data 410, embedded program common update data 420, and differential data 430.

The update procedure data 410 is a piece of data describing a process sequence that is to be performed by the update program 120 to update the embedded program 141 using the updated version data 400. The update program 120 reads out the update procedure data 410 from the top of it by one line, and sequentially executes processes described in each line. Specific examples will be described later with Figure 3.

The differential data 430 is a piece of data that holds a part of the embedded program 141 that is individually different according to types, model numbers, or the like of each of electronic components equipped in the electronic device 100. The differential data 430 is provided for each of types, model numbers, or the like of each of the electronic components.

The embedded program common update data 420 is a piece of data that can be used commonly among types, model numbers, or the like of each of the electronic components equipped in the electronic device 100 when the update program 120 updates the embedded program 141. For example, a piece of data such as described below can be used as the embedded program common update data 420.

### (Example No. 1 for the embedded program common update data 420)

A common portion in a program image data of the embedded program 141 in which portions that are different according to types, model numbers, or the like of each of the electronic components equipped in the electronic device 100 are excluded can be the embedded program common update data 420. In this case, the differential data 430 holds portions that are different according to types, model numbers, or the like of each of the electronic components, respectively. In addition, the update procedure data 410 describes which of the differential data 430 is to be applied to which parts of the embedded program common update data 420.

### (Example No. 2 for the embedded program common update data 420)

A program image data of the embedded program 141 that can be applied to a specific model number of each of the electronic components equipped in the electronic device 100 can be the embedded program common update data 420. In this case, the differential data 430 holds portions that are different according to types, model numbers, or the like of each of the electronic components, respectively. In addition, the update procedure data 410 describes which of the differential data 430 is to be replaced with which parts of the embedded program common update data 420.

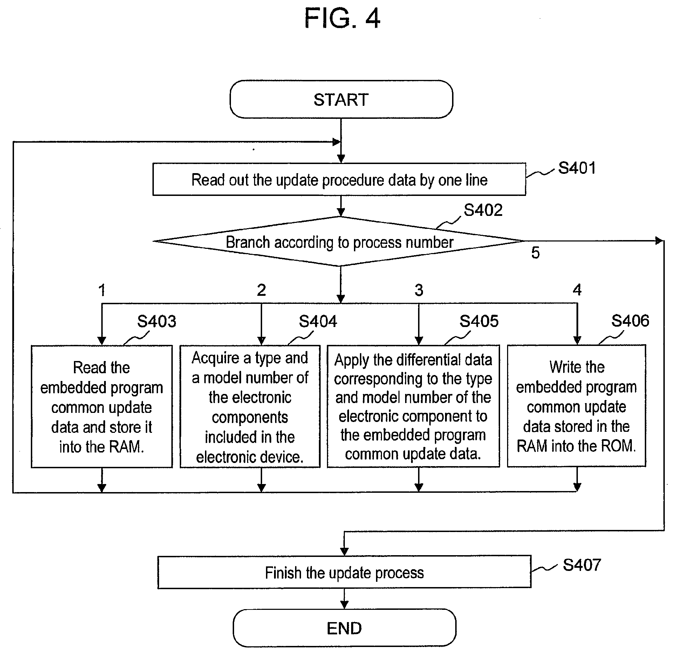

Figure 3 is a diagram showing a configuration of the update procedure data 410 and its data example. The update procedure data 410 sequentially describes process sequences that are to be executed by the update program 120. For the sake of convenience of description, the process sequences are described in a form of texts. However, the form of the process sequences can be any format as long as the update program 120 can interpret it. In addition, as long as an order of the process can be described, it is not necessary to sequentially describe process sequences from the top of data by one line. Each of contents of the process sequences will be described later with Figure 4.

Figure 4 is a diagram explaining a process flow for updating the embedded program 141. Hereinafter, each of steps of Figure 4 will be described.

### (Figure 4 : Step S401)

The update program 120 acquires the updated version data 400 from the disk 151 or the server 200. The update program 120 reads out, from the acquired updated version data 400, the update procedure data 410 by one line (by one process sequence).

### (Figure 4 : Step S402)

The process of the update program 120 branches according to contents of the process sequence described in the update procedure 410, and proceeds to the next step. For example, a numerical value indicating a process type can be described in the update procedure data 410, and the process may proceed to a step corresponding to the numerical value. Here, the step to proceed is assumed to be determined according to the value of "process number" shown in Figure 3.

### (Figure 4 : Step S403)

The update program 120 reads the embedded program common update data 420 according to the process sequence described in the first line of the update procedure data 410 shown in Figure 3 and stores it into a work area of the RAM 130.

### (Figure 4 : Step S404)

The update program 120 acquires types and model numbers of electronic components (the CPU 110, the RAM 130, the ROM 140, and the like) equipped in the electronic device 100 according to the process sequence described in the second line of the update procedure data 410 shown in Figure 3.

### (Figure 4 : Step S404: Supplementation)

If types and model numbers of the electronic device can be acquired from an internal register or the like equipped in each of the electronic components, those values can be used. Alternatively, the types and model numbers of each of the electronic components can be previously stored in a predetermined portion of the ROM 140, for example, and these values can be read out from the predetermined portion.

### (Figure 4 : Step S405)

The update program 120, according to the process sequence described in the third line of the update procedure data 410 shown in Figure 3, identifies the differential data 430 corresponding to the types and model numbers of the electronic components acquired in Step S404, and applies them onto the embedded program common update data 420. According to this step, an updated version of the embedded program 141 corresponding to the types and model numbers of the electronic components equipped in the electronic device 100 is created in the RAM 130.

### (Figure 4 : Step S405 : Supplementation)

A correspondence relationship between the types and model numbers of the electronic components and the differential data 430 is described in the update procedure data 410. An example of the description is : "Differential data 1 is applied if the model number of the CPU 110 is 001, and differential data 2 is applied if the model number is 002.".

### (Figure 4 : Step S406)

The update program 120 writes the updated version of the embedded program 141 stored in the RAM 130 into the ROM 140 according to the process sequence described in the fourth line of the update procedure data 410 shown in Figure 3.

### (Figure 4 : Step S406 : Supplementation)

If the size of the embedded program 141 is large, since not all of data cannot be written into the ROM 140 at once, this step may be repeatedly executed. In this case, the corresponding process sequence in the update procedure data 410 may instruct a write start address and a write end address.

### (Figure 4 : Step S407)

The update program 120 finishes the process for updating the embedded program 141 according to the process sequence described in the fifth line of the update procedure data 410 shown in Figure 3.

### <Embodiment 1 : Summary>

As described thus far, the update program 120 according to the embodiment 1 collectively acquires the common update data 420 that is common among the electronic devices 100 with different specifications of electronic components, as well as the differential data 430 corresponding to each of specifications of the electronic components. According to this, it is not necessary to individually create update image data of the embedded program 141 for each of specifications of the electronic components, thereby decreasing burdens for update tasks. In addition, only one piece of the common update data 420 is required, thus the data size of the updated version data 400 can be small.

Further, the update program 120 according to the embodiment 1 acquires types and model numbers of electronic components equipped in the electronic device 100, identifies the corresponding differential data 430, and applies it to the update process for the embedded program 141. According to this, it is not necessary for users of the electronic device 100 to perform tasks such as checking model numbers or the like of the electronic components and selecting the corresponding updated versions. Therefore, user's burdens of update tasks for the embedded program 141 are decreased.

### <Embodiment 2>

As described in the embodiment 1, when updating the embedded program 141, an update image is usually constructed on the RAM 130 and the image is written into the RAM 140. However, due to multi-functionalization of electronic devices in recent years, the size of the embedded program 141 may exceed sizes of work areas on the RAM 130.

Then, in a second embodiment of the present invention, an operational example will be described where a piece of data written into the RAM 140 is deleted from the RAM 130 to release storage areas, thereby securing work areas on the RAM 130. Since configurations of the network system 1000 and each of the devices are approximately the same as those of the embodiment 1, differences regarding the update procedure data 410 will be mainly described below.

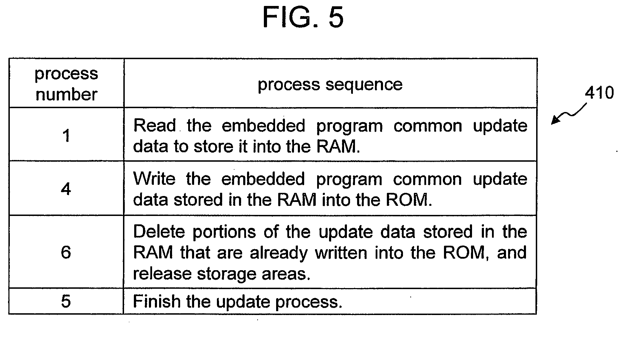

Figure 5 is a diagram showing a data example of the update procedure data 410 in the embodiment 2. In the embodiment 2, the update procedure data 410 describes an instruction to delete portions of data stored in the RAM 130 that are written into the ROM 140 and to release the storage areas in the RAM 130. The process number of the instruction is 6.

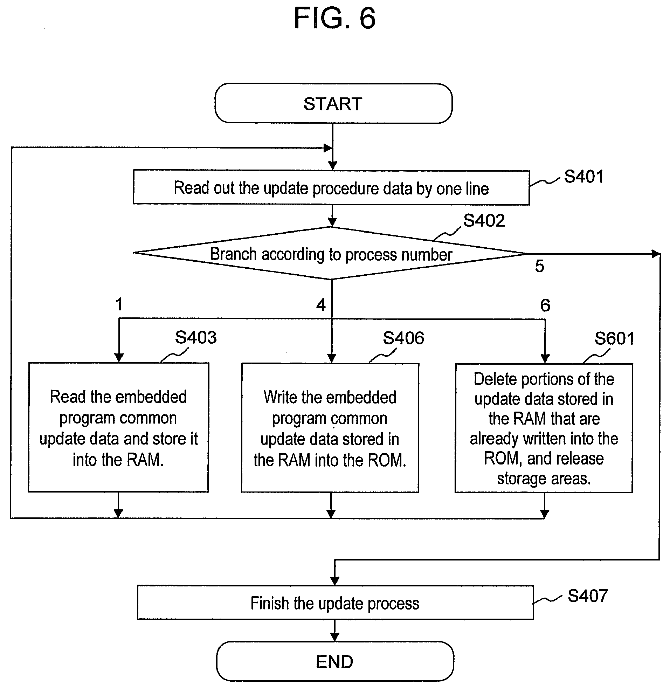

For the sake of convenience of description, process numbers 2 to 3 explained in the embodiment 1 is omitted. However, these processes can be executed in the embodiment 2. It also applies to Figure 6 described next.

Figure 6 is a diagram explaining a process flow for updating the embedded program 141 executed by the update program 120 in the embodiment 2. Hereinafter, each of steps in Figure 6 will be described.

### (Figure 6 : Steps S401 to S403, S406 to S407)

These steps are the same as each of steps in Figure 4 of the embodiment 1. However, in step S402, a branch destination corresponding to the process number described in the third line of Figure 5 is added.

### (Figure 6 : Step S601)

The update program 120, according to the process sequence described in the third line of the update procedure data 410 shown in Figure 5, deletes portions of the update data stored in the RAM 130 that are written into the ROM 140 and releases storage areas that stored the data.

### (Figure 6 : Step S601 : Supplementation)

When writing the update data stored in the RAM 130 into the ROM 140, the update program 120 may write a flag indicating about it, a written range, and the like into the RAM 130. In step S601, according to the flag, the portions written into the ROM 140 may be identified and the portions may be deleted from the RAM 130.

### <Embodiment 2 : Summary>

As described thus far, the update program 120 according to the embodiment 2 deletes portions of the update data stored in the RAM 130 that are written into the ROM 140 and releases corresponding storage areas according to descriptions of the update procedure data 410. This enables work areas on the RAM 130 to be secured. Therefore, even if the size of the embedded program 141 is larger than the storage capacity of the work areas, the update process can be continued without causing capacity shortage.

### <Embodiment 3>

In the embodiment 2, storage capacities of the RAM 130 are immediately released if a process sequence with process number 6 is described in the update procedure data 410. However, if such a release process is executed when there are sufficient capacities in the RAM 130, a waiting time occurs for the release process and the update process may need longer execution time for it.

Then, in an embodiment 4 of the present invention, an operation example will be described where a shortage of storage capacity in the RAM 130 is determined and storage capacities are released if it is insufficient.

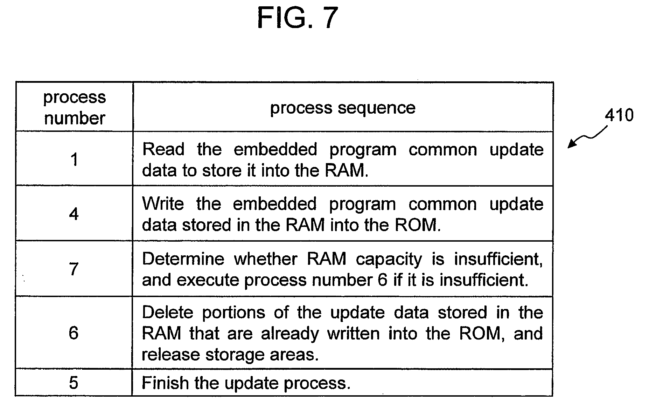

Figure 7 is a diagram showing a data example of the update procedure data 410 in the embodiment 3. In the embodiment 3, the update procedure data 410, in addition to the data example described in Figure 5 of the embodiment 2, describes an instruction to determine whether storage capacities of the RAM 130 are insufficient and to release the storage capacities if they are insufficient. The process number of the instruction is 7.

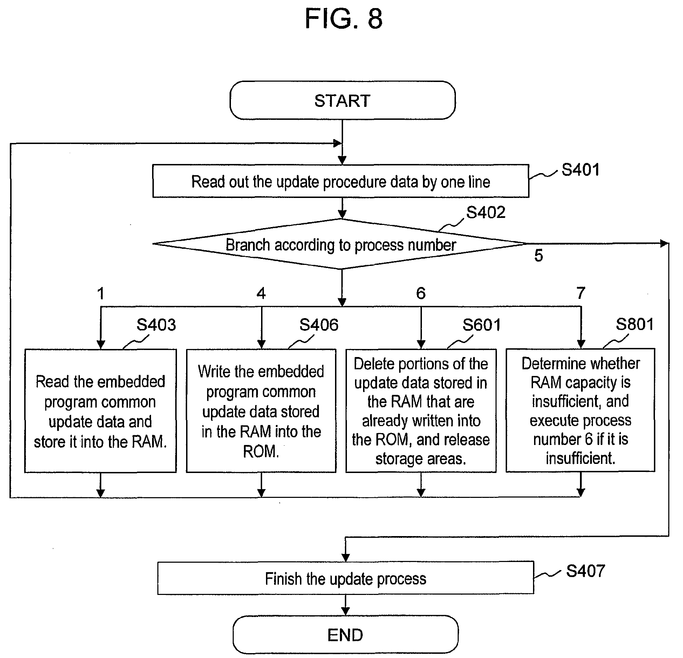

For the sake of convenience of description, the process numbers 2 to 3 described in the embodiment 1 are omitted. However, these processes can be executed in the embodiment 3. It also applies to Figure 8 described next.

Figure 8 is a diagram explaining a process flow for updating the embedded program 141 executed by the update program 120 in the embodiment 3. Hereinafter, each of steps in Figure 8 will be described.

### (Figure 8 : Steps S401 to S403, S406 to S407)

These steps are the same as each of steps in Figure 6 of the embodiment 2. However, in step S402, a branch destination corresponding to the process number described in the third line of Figure 7 is added.

### (Figure 8 : Step S601)

The operation of this step is the same as the corresponding step in Figure 6 of the embodiment 2. However, it is different in that this step is executed only if the capacity of the RAM 130 is determined to be insufficient in following step S801.

### (Figure 8 : Step S801)

The update program 120, according to the process sequence described in the third line of the update procedure data 410 shown in Figure 7, determines whether the storage capacity of the storage area in the ROM 130 where the update data is stored is insufficient. For example, a lower limit threshold of the storage capacity or the like can be previously described in processes of the update program 120. The update program 120, when determining that the storage capacity is insufficient, executes the process sequence at the time process number 6 appears in the update procedure data 410.

### (Figure 8 : Step S801 : Supplementation)

The update program 120, when determining that the storage capacity is insufficient in this step, may store a flag indicating about it into the RAM 130 so that the update program 120 can determine whether the process sequence has to be executed at the next time process number 6 appears in the update procedure data 410.

### <Embodiment 3 : Summary>

As described thus far, the update program 120 according to the embodiment 3 determines whether the storage capacity of the RAM 130 is insufficient and releases the storage capacity only if it is insufficient according to descriptions of the update procedure data 410. This enables to decrease process burdens for releasing storage capacities of the RAM 130.

### <Embodiment 4>

In the above-described embodiments 1 to 3, during the update program 120 is writing updated versions of the embedded program 141 into the ROM 140, power supplies may be cut off or communication routes may be shut down. At this time, the update process is suddenly terminated at a stage where the update data is partially written. Therefore, the storage area in the ROM 140 storing the embedded program 141 includes mixed data of newer and older versions of the embedded program 141. In this state, the embedded program 141 doesn't work properly.

When such problems occur, users of the electronic device 100 have to: make an inquiry to manufacturers; request a repair bringing the device to dealers or repair shops; unmount the electronic device 100 from its disposed location and send it to manufactures; or the like. Thus it is a heavy burden for the users.

Then, in an embodiment 4 of the present invention, a configuration will be described where update information of the embedded program 141 is previously written for each of predetermined write units of storage capacities of the ROM 140 (for example, for each unit of internal blocks in the ROM 140), so that it can be assessed how many portions have been updated. The configurations of the network system 1000 and each of devices are approximately the same as the embodiments 1 to 3. Thus differences regarding the update procedure data 410 will be mainly described below.

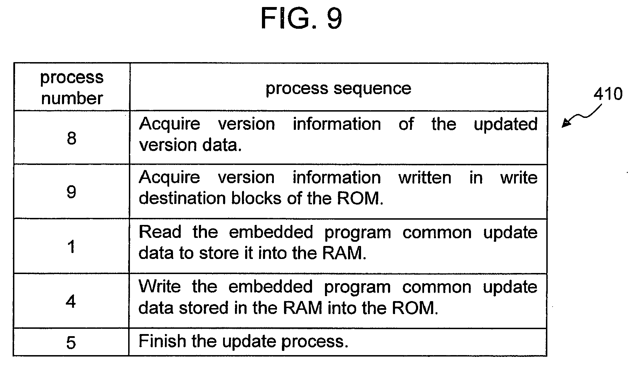

Figure 9 is a diagram showing a data example of the update procedure data 410 in the embodiment 4. In the embodiment 4, the update procedure data 410 describes an instruction to acquire version information of the updated version data 400. The process number of the instruction is 8. In addition, the update procedure data 410 describes an instruction to acquire version information of the embedded program 141 already written in write destination blocks of the ROM 140. The process number of the instruction is 9.

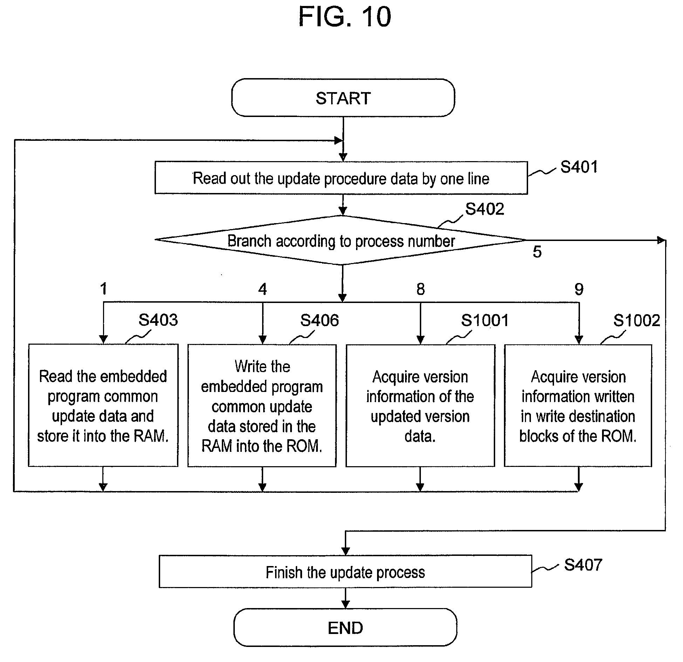

For the sake of convenience of description, the process numbers 2 to 3 and 6 to 7 described in the embodiments 1 to 3 are omitted. However, these processes can be executed in the embodiment 4. It also applies to Figure 10 described next.

Figure 10 is a diagram explaining a process flow for updating the embedded program 141 executed by the update program 120 in the embodiment 4. Hereinafter, each of steps in Figure 10 will be described.

### (Figure 10 : Steps S401 to S403, S407)

These steps are the same as each of steps in Figure 6 of the embodiment 2. However, in step S402, branch destinations corresponding to the process numbers described in the first and second lines of Figure 9 are added.

### (Figure 10 : Step S406)

This step is approximately the same as the corresponding step described in the embodiment 1. However, following points are different.

### (Figure 10 : Step S406 : Difference No. 1 from the embodiment 1)

The update program 120 writes version information of the updated version data 400 acquired in step S1001 into a write destination block of the ROM 140.

### (Figure 10 : Step S406 : Difference No. 2 from the embodiment 1)

The update program 120 cancels writing into the block if version information acquired in step S1002 that is previously written in the write destination block is equal to or newer than the version information acquired in step S1001.

### (Figure 10 : Step S1001)

The update program 120, according to the process sequence described in the first line of the update procedure data 410 shown in Figure 9, acquires version information of the updated version data 400. The version information of the updated version data 400 can be described, for example, in data body such as header portions of the updated version data 400 or the version information can be included in portions other than data body such as file name.

### (Figure 10 : Step S1002)

The update program 120, according to the process sequence described in the second line of the update procedure data 410 shown in Figure 9, acquires version information already written in the write destination block of the embedded program 141 in storage areas of the ROM 140.

### <Embodiment 4 : Summary>

As described thus far, the update program 120 according to the embodiment 4 writes version information of the updated version data 400 into write destination blocks of the ROM 140 according to descriptions of the update procedure data 410. In addition, if the version information already written in the write destination block of the ROM 140 is older than the version information of the updated version data 400, the updated version data and the version information is written, and if those versions are the same or the version of the write destination block is newer, writing is canceled. According to this, even if the update process is terminated during the embedded program 141 is being updated, it can be assessed how many portions have been updated on the basis of write destination block units of the ROM 140. Therefore, the embedded program 141 can be updated again without contradiction.

### <Embodiment 5>

In the above-mentioned descriptions, the update program 120 is configured as a program. However, the same function units can be configured by hardware devices such as circuit devices. In this case, the devices include each of function units configured by hardware actualizing functions corresponding to each of steps executed by the update program 120.

In addition, the present invention can be embodied in arbitrarily modified forms within the scope of claims without being limited by the above-described embodiments.

For example, in the embodiments, a car information device is described as the electronic device 100 that is an update target of the embedded program 141. However, the present invention is not limited to the examples of the embodiments, and it is obvious that the present invention can be applied to updating embedded programs for any type of electronic devices (for example, mobile information terminals or home information appliances).

Further, as the embedded program 141, any type of embedded software such as a firmware of the electronic device 100, an application program, and the like can be the target of the present invention.

### Reference Signs List

100: electronic device, 110: CPU, 120: update program, 130: RAM, 140: ROM, 150: disk read unit, 151: disk, 160: network communication unit, 200: server, 300: network, 400: updated version data, 410: update procedure data, 420: embedded program common update data, 430: differential data, 1000: network system

## Claims

1. A method for updating an embedded program (141) of an electronic device including an electronic component, the method comprising:
a common update data acquiring step (S403) acquiring common update data (420) that is a common portion of updated version data of the embedded program (141), the common portion being able to be commonly used among a plurality of the electronic devices including different types and model numbers of the electronic components;
a differential data acquiring step collectively acquiring differential data (430) between the common update data (420) and each updated version of the embedded program (141) that is respectively applied to the plurality of electronic devices;
a step (S401) acquiring update procedure data (410) describing a sequence to update the embedded program (141) of the electronic device using the common update data (420) and the differential data (430);
a model number acquiring step (S404) acquiring a type and a model number of the electronic component; and
an update step (410, S407) updating, according to the sequence described in the update procedure data (410), the embedded program (141) of the electronic device using the type and model number of the electronic component acquired in the model number acquiring step (S404) and using the common update data (420) and the differential data (430), wherein:
the update procedure data (410) describes a correspondence relationship between the type and model number of the electronic component included in the electronic device and which one of the differential data (430) is to be used; and
the update step (410, S407) further specifying which one of the differential data (430) is to be used using the correspondence relationship described in the update procedure data (410) and the type and model number of the electronic component acquired in the model number acquiring step (S404), and updating the embedded program (141) of the electronic device using the specified differential data (430).

2. The embedded program update method according to claim 1, wherein:
the update procedure data (410) describes a release instruction instructing to release updated portions of a storage area in a storage device included in the electronic device, the storage area being temporarily used for storing the common update data (420) or the differential data (430) when updating the embedded program (141); and
the update step (410, S407) further releasing, according to the release instruction described in the update procedure data (410), a storage area of the storage device included in the electronic device.

3. The embedded program update method according to claim 2, wherein:
the update procedure data (410) describes a capacity determination instruction instructing to determine whether a storage area in a storage device included in the electronic device is insufficient, the storage area being temporarily used for storing the common update data (420) or the differential data (430) when updating the embedded program (141); and
the update step (410, S407)
further determining, according to the capacity determination instruction described in the update procedure data (410), whether a storage area in a storage device included in the electronic device is insufficient, the storage area being temporarily used for storing the common update data (420) or the differential data (430) when updating the embedded program (141), and
if the storage is insufficient, further releasing the storage area of the storage device included in the electronic device according to the release instruction.

4. The embedded program update method according to any one of claims 1 to 3, wherein:
the update procedure data (410) describes
a version acquiring instruction to read out version information of the embedded program (141) for each of predetermined write units of a storage area in a storage device included in the electronic device storing the embedded program (141), and
a version writing instruction to write version information of the embedded program (141) for each of the write units;
the common update data acquiring step (S403) or the differential data acquiring step further acquiring version information of the embedded program (141); and
the update step (410, S407)
further acquiring, when updating the embedded program (141), version information of the embedded program (141) for each of the write units according to the version acquiring instruction, and
if the acquired version information of the embedded program (141) is older than the version information of the embedded program (141) acquired in the common update data acquiring step or the differential data acquiring step, further writing version information of the embedded program (141) into the storage device for each of the write units according to the version writing instruction described in the update procedure data (410), as well as updating the embedded program (141).

5. An embedded program update program (120) that causes a processing device included in the electronic device to execute the embedded program update method according to any one of claims 1 to 4.

6. An electronic device including an electronic component and an embedded program (141), the electronic device comprising:
a processing unit (110) executing the embedded program (141);
a common update data acquiring unit acquiring common update data (420) that is a common portion of an updated version data of the embedded program (141), the common portion being able to be commonly used among a plurality of the electronic devices including different types and model numbers of the electronic components;
a differential data acquiring unit collectively acquiring differential data (430) between the common update data (420) and each updated version of the embedded program (141) that is respectively applied to the plurality of electronic devices;
an update procedure data acquiring unit acquiring update procedure data (410) describing a sequence to update the embedded program (141) of the electronic device using the common update data (420) and the differential data (430);
a model number acquiring unit acquiring a type and a model number of the electronic component; and
an update unit updating, according to the sequence described in the update procedure data (410), the embedded program (141) of the electronic device using the type and model number of the electronic component acquired by the model number acquiring unit and using the common update data (420) and the differential data (430), wherein:
the update procedure data (410) describes a correspondence relationship between the type and model number of the electronic component included in the electronic device and which one of the differential data (430) is to be used; and
the update unit further specifying which one of the differential data (430) is to be used using the correspondence relationship described in the update procedure data (410) and the type and model number of the electronic component acquired in the model number acquiring step (S404), and updating the embedded program (141) of the electronic device using the specified differential data (430).

7. A network system comprising:
an electronic device according to claim 6; and
a server (200) holding the common update data (420), the differential data (430), and the update procedure data (410);
wherein
the electronic device acquires the common update data (420) and the differential data (430) by downloading them from the server (200).

## Patentansprüche

1. Verfahren zum Aktualisieren eines eingebetteten Programms (141) einer elektronischen Einrichtung, die eine elektronische Komponente umfasst, wobei das Verfahren umfasst:
ein gemeinsame Aktualisierungsdaten-Erfassungsschritt (S403) zum Erfassen gemeinsamer Aktualisierungsdaten (420), die ein gemeinsamer Teil der Daten einer aktualisierten Version des eingebetteten Programms (141) sind, wobei der gemeinsame Teil von mehreren elektronischen Einrichtungen gemeinsam genutzt werden kann, wobei die mehreren elektronischen Einrichtungen verschiedene Arten und Modellnummern der elektronischen Komponenten umfassen;
ein Unterschiedsdaten-Erfassungsschritt zum kollektiven Erfassen von Unterschiedsdaten (430), zwischen den gemeinsamen Aktualisierungsdaten (420) und jeder aktualisierten Version des eingebetteten Programms (141), das jeweils für die mehreren elektronischen Einrichtungen verwendet wird;
ein Schritt (S401) zum Erfassen von Aktualisierungsprozedur-Daten (410), die eine Sequenz zum Aktualisieren des eingebetteten Programms (141) der elektronischen Einrichtung unter Verwendung der gemeinsamen Aktualisierungsdaten (420) und der Unterschiedsdaten (430) beschreibt;
ein Modellnummer-Erfassungsschritt (S404) zum Erfassen eines Typs und einer Modellnummer der elektronischen Einrichtung; und
ein Aktualisierungsschritt (410, S407) zum Aktualisieren des eingebetteten Programms (141) der elektronischen Einrichtung gemäß der in den Aktualisierungsprozedur-Daten (410) beschriebenen Sequenz unter Verwendung des Typs und der Modellnummer der elektronischen Komponente, die in dem Schritt (S404) zum Erfassen der Modellnummer erfasst wurden, und unter Verwendung der gemeinsamen Aktualisierungsdaten (420) und der Unterschiedsdaten (430), wobei:
die Aktualisierungsprozedur-Daten (410) eine Korrespondenzbeziehung zwischen dem Typ und der Modellnummer der elektronischen Komponente, die in der elektronischen Einrichtung enthalten ist, beschreiben und ferner beschreiben, welche der Unterschiedsdaten (430) zu verwenden sind; und
der Aktualisierungsschritt (410, S407) ferner spezifiziert, welche der Unterschiedsdaten (430) in der von den Aktualisierungsprozedur-Daten (410) beschriebenen Korrespondenzbeziehung zu verwenden ist, und ferner den Typ und die Modellnummer der elektronischen Komponente, die in dem Modellnummer-Erfassungsschritt (S404) erfasst wurden, spezifiziert, und das eingebettete Programm (141) der elektronischen Einrichtung unter Verwendung der spezifizierten Unterschiedsdaten (430) aktualisiert.

2. Verfahren nach Anspruch 1, wobei
die Aktualisierungsprozedur-Daten (410) einen Freigabebefehl beschreiben, der das Freigeben aktualisierter Teile eines Speicherbereichs in einer Speichereinrichtung, die in der elektronischen Einrichtung enthalten ist, veranlasst, wobei der Speicherbereich zum Speichern der gemeinsamen Aktualisierungsdaten (420) oder der Unterschiedsdaten (430) vorübergehend genutzt wird, wenn das eingebettete Programm (141) aktualisiert wird; und
der Aktualisierungsschritt (410, S407) ferner in Übereinstimmung mit dem Freigabebefehl, der in den Aktualisierungsprozedur-Daten (410) beschrieben ist, einen Speicherbereich der Speichereinrichtung, die in der elektronischen Einrichtung enthalten ist, freigibt.

3. Verfahren nach Anspruch 2, wobei
die Aktualisierungsprozedur-Daten (410) einen Kapazitätsermittlungs-Befehl beschreiben, der angibt zu ermitteln, ob ein Speicherbereich in einer Speichereinrichtung, die in der elektronischen Einrichtung enthalten ist, nicht ausreichend ist, wobei der Speicherbereich zum Speichern der gemeinsamen Aktualisierungsdaten (420) oder der Unterschiedsdaten (430) vorübergehend genutzt wird, wenn das eingebettete Programm (141) aktualisiert wird;
wobei der Aktualisierungsschritt (410, S407) ferner abhängig von dem Kapazitätsermittlungs-Befehl, der in den Aktualisierungsprozedur-Daten (410) beschrieben ist, ermittelt, ob ein Speicherbereich in einer Speichereinrichtung, die in der elektronischen Einrichtung enthalten ist, nicht ausreichend ist, wobei der Speicherbereich zum Speichern der gemeinsamen Aktualisierungsdaten (420) oder der Unterschiedsdaten (430) vorübergehend genutzt wird, wenn das eingebettete Programm (141) aktualisiert wird, und wobei
der Aktualisierungsschritt, wenn der Speicher nicht ausreichend ist, ferner den Speicherbereich der Speichereinrichtung, die in der elektronischen Einrichtung enthalten ist, gemäß dem Freigabebefehl freigibt.

4. Verfahren nach einem der Ansprüche 1 bis 3, wobei
die Aktualisierungsprozedur-Daten (410) folgendes beschreiben:
einen Versionserfassungs-Befehl zum Auslesen von Versionsinformation des eingebetteten Programms (141) für jede von mehreren vorgegebenen Schreibeinheiten eines Speicherbereichs in einer Speichereinrichtung, die in der elektronischen Einrichtung, die das eingebettete Programm (141) speichert, enthalten ist, und
einen Versionsschreib-Befehl zum Schreiben von Versionsinformation des eingebetteten Programms (141) für jede der Schreibeinheiten;
wobei der Schritt (S403) zum Erfassen gemeinsamer Aktualisierungsdaten oder der Schritt zum Erfassen von Unterschiedsdaten ferner die Versionsnummer des eingebetteten Programms (141) erfasst; und
wobei der Aktualisierungsschritt (410, S407) beim Aktualisieren des eingebetteten Programms (141) ferner die Versionsinformation des eingebetteten Programms (141) für jede der Schreibeinheiten in Übereinstimmung mit dem Versionserfassungs-Befehl erfasst, und dann,
wenn die erfasste Versionsinformation des eingebetteten Programms (141) älter ist als die Versionsinformation des eingebetteten Programms (141), die in dem Schritt des Erfassens der gemeinsamen Aktualisierungsdaten oder in dem Schritt des Erfassens der Unterschiedsdaten erfasst wurde, Versionsinformation des eingebetteten Programms (141) in die Speichereinrichtung für jede der Schreibeinheiten in Übereinstimmung mit dem Versionsschreib-Befehl, der in den Aktualisierungsprozedur-Daten (410) beschrieben ist, schreibt und das eingebettete Programm (141) aktualisiert.

5. Programm (120) zum Aktualisieren eines eingebetteten Programms, das eine Verarbeitungseinrichtung, die in der elektronischen Einrichtung enthalten ist, dazu bringt, das Verfahren gemäß einem der Ansprüche 1 bis 4 auszuführen.

6. Elektronische Einrichtung umfassend eine elektronische Komponente und ein eingebettetes Programm (141), wobei die elektronische Einrichtung umfasst:
eine Verarbeitungseinheit (110) zum Ausführen des eingebetteten Programms (141);
eine gemeinsame Aktualisierungsdaten-Erfassungseinheit zum Erfassen gemeinsamer Aktualisierungsdaten (420), die ein gemeinsamer Teil der Daten einer aktualisierten Version des eingebetteten Programms (141) sind, wobei der gemeinsame Teil von mehreren elektronischen Einrichtungen gemeinsam genutzt werden kann, wobei die mehreren elektronischen Einrichtungen verschiedene Arten und Modellnummern der elektronischen Komponenten umfassen;
eine Unterschiedsdaten-Erfassungseinheit zum kollektiven Erfassen von Unterschiedsdaten (430), zwischen den gemeinsamen Aktualisierungsdaten (420) und jeder aktualisierten Version des eingebetteten Programms (141), das jeweils für die mehreren elektronischen Einrichtungen verwendet wird;
eine Einheit zum Erfassen von Aktualisierungsprozedur-Daten (410), die eine Sequenz zum Aktualisieren des eingebetteten Programms (141) der elektronischen Einrichtung unter Verwendung der gemeinsamen Aktualisierungsdaten (420) und der Unterschiedsdaten (430) beschreibt;
eine Modellnummer-Erfassungseinheit (S404) zum Erfassen eines Typs und einer Modellnummer der elektronischen Einrichtung; und
eine Aktualisierungseinheit zum Aktualisieren des eingebetteten Programms (141) der elektronischen Einrichtung gemäß der in den Aktualisierungsprozedur-Daten (410) beschriebenen Sequenz unter Verwendung des Typs und der Modellnummer der elektronischen Komponente, die von der Modellnummer-Erfassungseinheit erfasst wurden, und unter Verwendung der gemeinsamen Aktualisierungsdaten (420) und der Unterschiedsdaten (430), wobei:
die Aktualisierungsprozedur-Daten (410) eine Korrespondenzbeziehung zwischen dem Typ und der Modellnummer der elektronischen Komponente, die in der elektronischen Einrichtung enthalten ist, beschreiben und ferner beschreiben, welche der Unterschiedsdaten (430) zu verwenden sind; und
die Aktualisierungseinheit ferner spezifiziert, welche der Unterschiedsdaten (430) in der von den Aktualisierungsprozedur-Daten (410) beschriebenen Korrespondenzbeziehung zu verwenden ist, und ferner den Typ und die Modellnummer der elektronischen Komponente, die in dem Modellnummer-Erfassungsschritt (S404) erfasst wurden, spezifiziert, und das eingebettete Programm (141) der elektronischen Einrichtung unter Verwendung der spezifizierten unterschiedlichen Daten (430) aktualisiert.

7. Netzwerksystem umfassend:
eine elektronische Einrichtung nach Anspruch 6; und
einen Server (200), der die gemeinsamen Aktualisierungs-Daten (420), die Unterschiedsdaten (430) und die Aktualisierungsprozedur-Daten (410) enthält;
wobei die elektronische Einrichtung die gemeinsamen A.-Daten (420) und die Unterschiedsdaten (430) durch Herunterladen von dem Server (200) erfasst.

## Revendications

1. Procédé de mise à jour d'un programme intégré (141) d'un dispositif électronique incluant un composant électronique, le procédé comprenant :
une étape d'acquisition de données de mise à jour communes (S403) acquérant des données de mise à jour communes (420) qui correspondent à une partie commune de données de versions mises à jour du programme intégré (141), la partie commune pouvant être utilisée communément parmi une pluralité de dispositifs électroniques incluant différents types et numéros de modèle des composants électroniques ;
une étape d'acquisition de données différentielles acquérant collectivement des données différentielles (430) entre les données de mise à jour communes (420) et chaque version mise à jour du programme intégré (141) qui est appliquée respectivement à la pluralité de dispositifs électroniques ;
une étape (S401) acquérant des données de procédure de mise à jour (410) décrivant une séquence pour mettre à jour le programme intégré (141) du dispositif électronique en utilisant les données de mise à jour communes (420) et les données différentielles (430) ;
une étape d'acquisition de numéro de modèle (S404) acquérant un type et un numéro de modèle du composant électronique ; et
une étape de mise à jour (410, S407) mettant à jour, selon la séquence décrite dans les données de procédure de mise à jour (410), le programme intégré (141) du dispositif électronique, en utilisant le type et le numéro de modèle du composant électronique acquis au cours de l'étape d'acquisition de numéro de modèle (S404) et en utilisant les données de mise à jour communes (420) et les données différentielles (430), dans lequel :
les données de procédure de mise à jour (410) décrivent une relation de correspondance entre le type et le numéro de modèle du composant électronique inclus dans le dispositif électronique et les données devant être utilisées parmi les données différentielles (430) ; et
l'étape de mise à jour (410, S407) spécifiant en outre quelles données doivent être utilisées parmi les données différentielles (430), en utilisant la relation de correspondance décrite dans les données de procédure de mise à jour (410) et le type et le numéro de modèle du composant électronique acquis au cours de l'étape d'acquisition de numéro de modèle (S404), et mettant à jour le programme intégré (141) du dispositif électronique en utilisant les données différentielles spécifiées (430).

2. Procédé de mise à jour de programme intégré selon la revendication 1, dans lequel :
les données de procédure de mise à jour (410) décrivent une instruction de libération ordonnant de libérer des parties mises à jour d'une zone de stockage dans un dispositif de stockage inclus dans le dispositif électronique, la zone de stockage étant utilisée temporairement en vue de stocker les données de mise à jour communes (420) ou les données différentielles (430) lors de la mise à jour du programme intégré (141) ; et
l'étape de mise à jour (410, S407) libérant en outre, selon l'instruction de libération décrite dans les données de procédure de mise à jour (410), une zone de stockage du dispositif de stockage inclus dans le dispositif électronique.

3. Procédé de mise à jour de programme intégré selon la revendication 2, dans lequel :
les données de procédure de mise à jour (410) décrivent une instruction de détermination de capacités ordonnant de déterminer si une zone de stockage dans un dispositif de stockage inclus dans le dispositif électronique est insuffisante, la zone de stockage étant utilisée temporairement en vue de stocker les données de mise à jour communes (420) ou les données différentielles (430) lors de la mise à jour du programme intégré (141) ; et
l'étape de mise à jour (410, S407)
déterminant en outre, selon l'instruction de détermination de capacités décrite dans les données de procédure de mise à jour (410), si une zone de stockage dans un dispositif de stockage inclus dans le dispositif électronique est insuffisante, la zone de stockage étant utilisée temporairement en vue de stocker les données de mise à jour communes (420) ou les données différentielles (430) lors de la mise à jour du programme intégré (141) ; et
si le stockage est insuffisant, libérant en outre la zone de stockage du dispositif de stockage inclus dans le dispositif électronique selon l'instruction de libération.

4. Procédé de mise à jour de programme intégré selon l'une quelconque des revendications 1 à 3, dans lequel :
les données de procédure de mise à jour (410) décrivent :
une instruction d'acquisition de version pour lire des informations de version du programme intégré (141) pour chacune des unités d'écriture prédéterminées d'une zone de stockage dans un dispositif de stockage inclus dans le dispositif électronique stockant le programme intégré (141) ; et
une instruction d'écriture de version pour écrire des informations de version du programme intégré (141) pour chacune des unités d'écriture ;
l'étape d'acquisition de données de mise à jour communes (S403) ou l'étape d'acquisition de données différentielles acquérant en outre des informations de version du programme intégré (141) ; et
l'étape de mise à jour (410, S407) :
acquérant en outre, lors de la mise à jour du programme intégré (141), des informations de version du programme intégré (141) pour chacune des unités d'écriture selon l'instruction d'acquisition de version ; et
si les informations de version acquises du programme intégré (141) sont plus anciennes que les informations de version du programme intégré (141) acquises au cours de l'étape d'acquisition de données de mise à jour communes ou de l'étape d'acquisition de données différentielles, écrivant en outre des informations de version du programme intégré (141) dans le dispositif de stockage pour chacune des unités d'écriture selon l'instruction d'écriture de version décrite dans les données de procédure de mise à jour (410), et mettant également à jour le programme intégré (141).

5. Programme de mise à jour de programme intégré (120) qui amène un dispositif de traitement inclus dans le dispositif électronique à exécuter le procédé de mise à jour de programme intégré selon l'une quelconque des revendications 1 à 4.

6. Dispositif électronique incluant un composant électronique et un programme intégré (141), le dispositif électronique comportant :
une unité de traitement (110) exécutant le programme intégré (141) ;
une unité d'acquisition de données de mise à jour communes acquérant des données de mise à jour communes (420) qui correspondent à une partie commune de données de versions mises àjour du programme intégré (141), la partie commune pouvant être utilisée communément parmi une pluralité de dispositifs électroniques incluant différents types et numéros de modèle des composants électroniques ;
une unité d'acquisition de données différentielles acquérant collectivement des données différentielles (430) entre les données de mise à jour communes (420) et chaque version mise à jour du programme intégré (141) qui est appliquée respectivement à la pluralité de dispositifs électroniques ;
une unité d'acquisition de données de procédure de mise à jour acquérant des données de procédure de mise à jour (410) décrivant une séquence pour mettre à jour le programme intégré (141) du dispositif électronique en utilisant les données de mise à jour communes (420) et les données différentielles (430) ;
une unité d'acquisition de numéro de modèle acquérant un type et un numéro de modèle du composant électronique ; et
une unité de mise à jour mettant à jour, selon la séquence décrite dans les données de procédure de mise àjour (410), le programme intégré (141) du dispositif électronique, en utilisant le type et le numéro de modèle du composant électronique acquis par l'unité d'acquisition de numéro de modèle, et en utilisant les données de mise à jour communes (420) et les données différentielles (430), dans lequel :
les données de procédure de mise àjour (410) décrivent une relation de correspondance entre le type et le numéro de modèle du composant électronique inclus dans le dispositif électronique et les données devant être utilisées parmi les données différentielles (430) ; et
l'unité de mise à jour spécifiant en outre quelles données doivent être utilisées parmi les données différentielles (430), en utilisant la relation de correspondance décrite dans les données de procédure de mise à jour (410) et le type et le numéro de modèle du composant électronique acquis au cours de l'étape d'acquisition de numéro de modèle (S404), et mettant à jour le programme intégré (141) du dispositif électronique en utilisant les données différentielles spécifiées (430).

7. Système de réseau comportant :
un dispositif électronique selon la revendication 6 ; et
un serveur (200) maintenant les données de mise à jour communes (420), les données différentielles (430), et les données de procédure de mise à jour (410) ;
dans lequel
le dispositif électronique acquiert les données de mise à jour communes (420) et les données différentielles (430) en les téléchargeant à partir du serveur (200).
